# EUROPEAN PATENT APPLICATION

(11) **EP 2 039 927 A1**
(43) Date of publication of application: **25.03.2009**
(21) Application number: 07425581.1
(22) Date of filing: 21.09.2007
(51) Int. Cl.: F03D 1/06, F03D 7/02, F03D 11/00

(54) **Horizontal-axis wind turbine**

(71) Applicant: Antomag s.r.l., 20135 Milano (MI) (IT)
(72) Inventor: Antolini, Claudio, 20151 Milano (IT)
(74) Representative: Concone, Emanuele

(57) **Abstract**

A horizontal-axis wind turbine comprises a rotor of radius ranging from 15 cm to 220 cm, with ten blades (1) fixed on rods (2) radially introduced at equally spaced positions in a hub assembly (3) mounted on a shaft (4), the rods (2) being connected to the hub assembly (3) also through guy wires (5) secured at their distal end, each of the blades (1) having the shape of an irregular pentagon divided into four portions with a first rectangular portion (1a) that extends from the rod (2) to the closest lateral edge and is curved forward with a curvature more pronounced in the internal region and less in the external region, and a second flat portion (1b) that extends from the rod (2) toward the opposite lateral edge upto two bend lines that define a third external trapezoidal portion (1c) and a fourth internal triangular portion (1d) which take up the whole edge and are bent backward. Such a wind turbine is inexpensive, highly efficient, small-sized, mechanically self-adjusting, has no environmental impact and is able to produce electricity with any kind of wind from a little over zero to 42 m/s.

## Description

The present invention relates to wind turbines, and in particular to a small-size horizontal-axis turbine.

It is known that a horizontal-axis wind turbine usually consists of a tower between 60 and 100 meters high on top of which there is located a nacelle containing an electric generator driven by a rotor having blades about 20 meters long (usually 2 or 3 blades). Such a generator requires a minimum wind speed of 3-5 m/s and delivers the design power at a wind speed of 12-14 m/s, whereas at high speeds in the range of 20-25 m/s it is blocked by a braking system for safety reasons.

The environmental impact is a great problem for the installation of this type of plants since in most cases the windiest places are the tops and slopes of hills and mountains as well as the coastal regions, places where the environment is protected and where the wind farms are visible even from a great distance. Moreover, these plants cause a significant noise pollution, that in delicate ecosystems could affect the life of the local species.

Furthermore, the blades of large-diameter rotors require that the portion closest to the rotation axis be sufficiently strong to withstand the mechanical loads that affect the entire blade and thus it is necessary to increase the mass of these portions. The result is that large generators must necessarily have significant winds to be able to provide an acceptable efficiency and must be provided with auxiliary electro-mechanical systems for the start and for adjusting the inclination of the blades.

A second important problem for the production of power on a large scale is the randomness of the produced electric power, since the wind does not provide power continuously and homogeneously and can not be controlled to adapt the produced energy to the users' request. A large production of electric power nowadays requires large plants with large-size blades, whereas the plants with small blades generally produce minimal amounts of electric power.

Therefore, the large plants have a high environmental impact and require complicated and expensive installations with long investment return times, while the small plants of minimum environmental impact did not have the technological development saved for the large plants and therefore have an efficiency and a production too low to be significant at a commercial level.

Therefore the object of the present invention is to provide a wind turbine which overcomes the above-mentioned drawbacks. This object is achieved by means of an inexpensive, highly efficient, small-size wind turbine that is mechanically self-adjusting and has no environmental impact, placing the attention on the overall efficiency of the plant that must be able to produce electricity for as much time as possible and to operate with any kind of wind as low as it can be.

These and other advantages and characteristics of the wind turbine according to the present invention will be clear to those skilled in the art from the following detailed description of an embodiment thereof, with reference to the annexed drawings wherein:
Fig.1 is a front perspective view of the rotor of said turbine, a single blade being illustrated for the sake of simplicity of the drawing;
Fig.2 is a front view similar to the preceding one;
Fig.3 is a side see-through view of the hub assembly of said rotor;
Fig.4 is a top plan view of a rotor blade;
Fig.5 is a rear perspective view of a first component of said hub assembly;
Fig.6 is a front perspective view of a second component of said hub assembly;
Fig.7 is a front perspective view of a third component of said hub assembly;
Fig.8 is a front perspective view of a fourth component of said hub assembly;
Fig.9 is a front perspective view of the rotor support and orientation structure;
Fig.10 is a side see-through view of the structure of Fig.9 with an enlarged detail;
Fig.11 is a front see-through view of the structure of Fig.9;
Fig. 12 is a diagrammatic side view showing the wind-conveying function of the structure of Fig.9;
Fig.13 is a diagrammatic top plan view showing the circulation of air around a blade;
Fig.14 is a diagram showing the geometric construction of the blade surface; and
Fig.15 is a diagram showing the geometric construction of the radius of curvature of the curved portion of the blade.

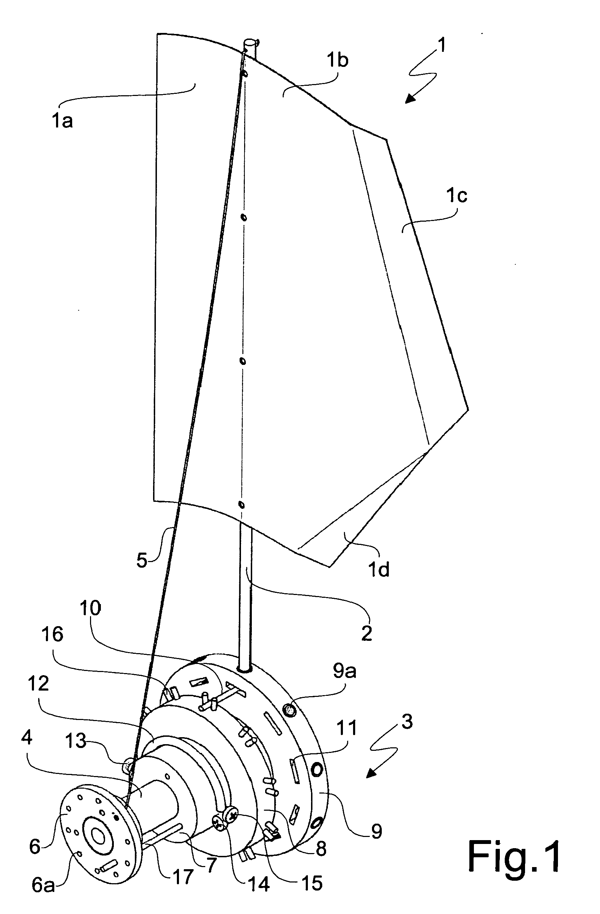

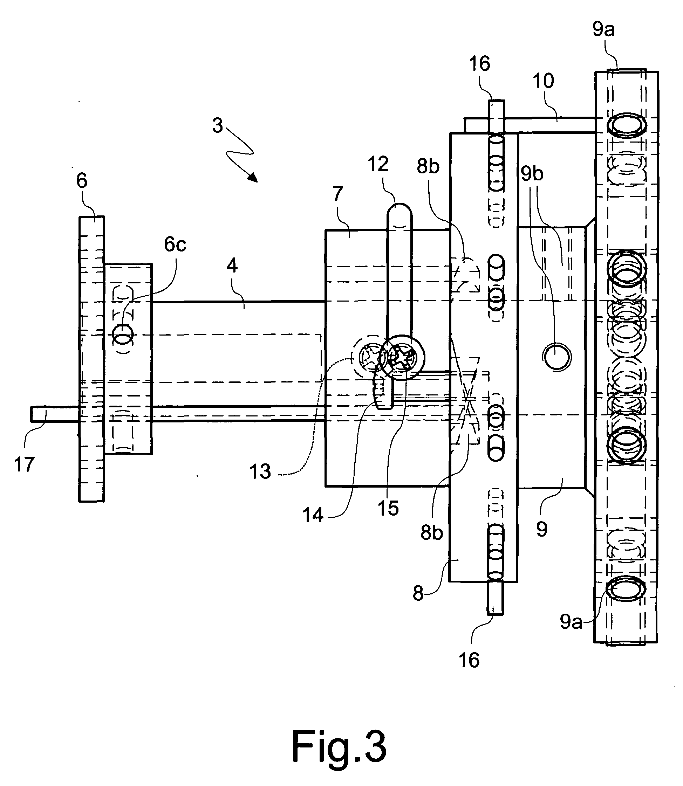

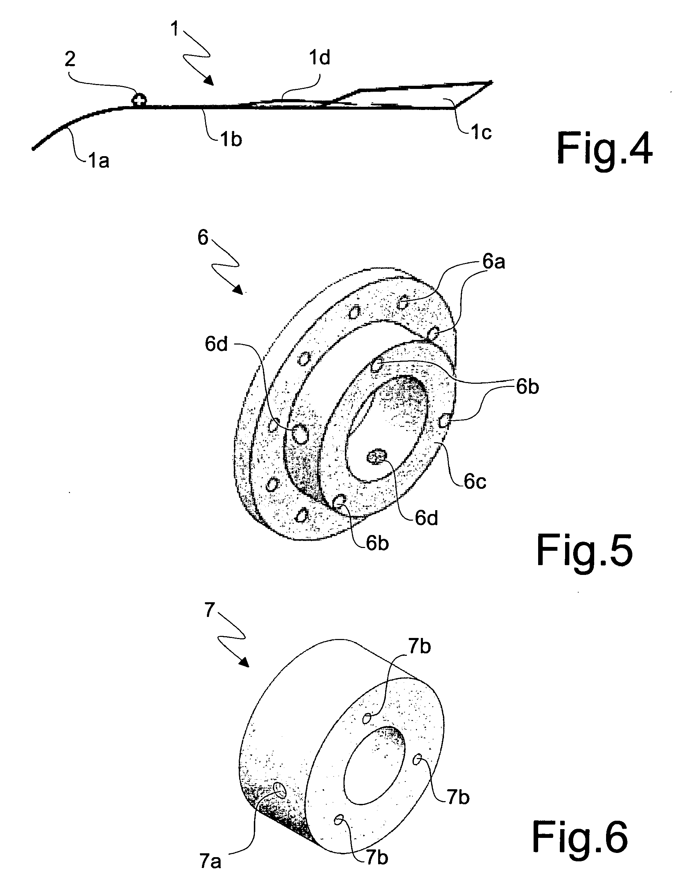

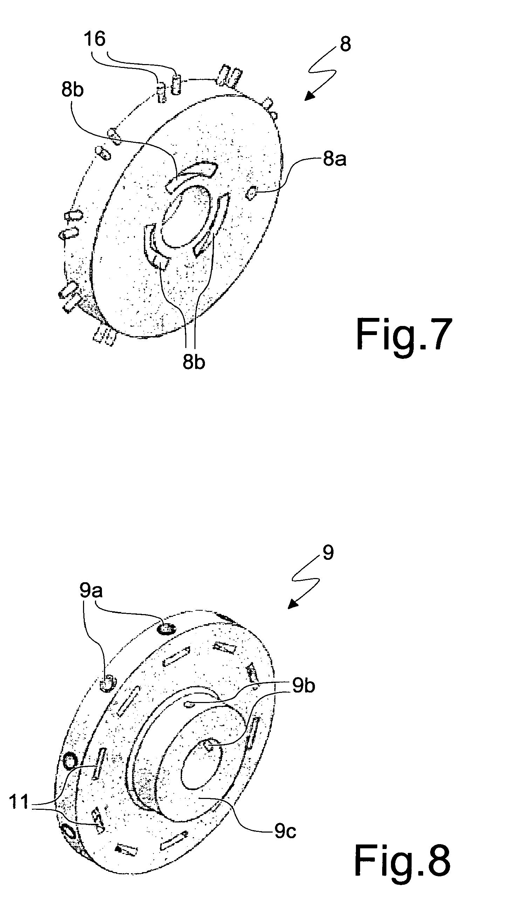

Referring to figures 1 to 4, there is seen that the rotor of a wind turbine according to the present invention includes ten blades 1, only one of which is illustrated in the figures, fixed on rods 2 radially introduced into a hub assembly 3 mounted on a shaft 4, said rods 2 being connected to the hub assembly 3 also through guy wires 5 secured at their distal end. The hub assembly 3 is made up of, proceeding from the front to the rear, a guy wires disk 6, a spring-carrying disk 7, an adjustment disk 8 and a blade-carrying disk 9 (which are individually illustrated in figures 5 to 8).

More specifically, the ten blades 1 are arranged equally spaced along the periphery of the blade-carrying disk 9 and each rod 2 is introduced into a bushing 9a for an easy rotation around its axis. The locking of rod 2 is achieved by means of an axial pin 10 that passes through a horizontal slot 11 and engages a transverse hole formed in rod 2.

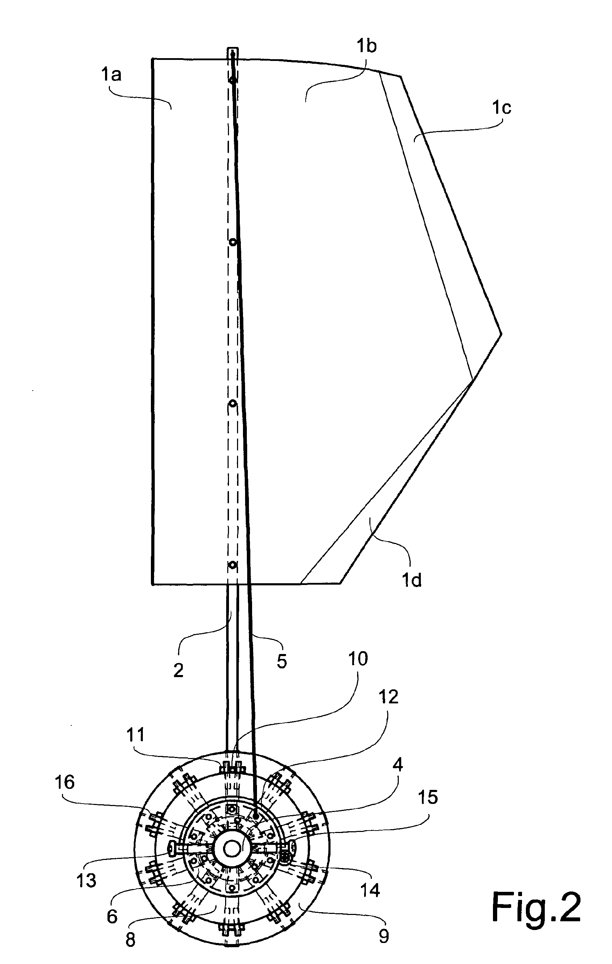

Furthermore, in a hole located in the top portion of rod 2, externally with respect to blade 1, there is secured one end of the guy wire 5 that at the other end is hooked in an axial hole 6a of the guy wires disk 6. As clearly illustrated in Fig.2, in order to increase the hold of the guy wire 5 the hole 6a in which it is hooked is not the hole aligned with the bushing 9a in which the corresponding rod 2 is introduced but the following hole, considering the counter-clockwise direction of rotation of the rotor.

It should be noted that the rotor illustrated here rotates counter-clockwise due to the specific shape of blades 1, but it is clear that were blades 1 to have a mirror shape the rotor would rotate clockwise. Moreover, the terms "internal" and "external" used to define the portions of the components are meant with reference to the radial direction with respect to the rotation axis, except where differently specified.

The geometric construction of blade 1 will be illustrated in detail further on, yet these figures already show that it has the shape of an irregular pentagon divided into four portions. A first rectangular portion 1a extends from rod 2 to the left edge and is slightly curved forward with a curvature more pronounced in the internal region and less in the external region. A second portion 1b is flat and extends from rod 2 toward the right upto two bend lines that define two portions 1c, 1d which take up the whole right edge. The external trapezoidal portion 1c is bent backward at an angle of about 25°, while the internal triangular portion 1d is bent backward at an angle of about 20°.

Referring now also to figures 5 to 8, it should be noted that the guy wires disk 6, the spring-carrying disk 7 and the blade-carrying disk 9 are fixed on shaft 4 by means of screws that engage threaded bores formed in the latter. On the contrary, the adjustment disk 8 is not fixed on shaft 4 but is drawn into rotation by a spring 12, extending in the circumferential direction along about half of the periphery of the spring-carrying disk 7.

The two ends of spring 12 are fixed respectively to a first screw 13 screwed into a radial threaded bore 7a formed in the spring-carrying disk 7, and to a second screw 14 screwed into an axial threaded bore 8a formed in the adjustment disk 8. In this way, disk 7 fixed on shaft 4 draws into counter-clockwise rotation disk 8 through spring 12, which however allows for a relative rotation between the two disks. A third screw 15, screwed into a second radial threaded bore formed in the spring-carrying disk 7 at a position diametrically opposite to the first bore 7a, acts as an end stop to define the minimum extension of spring 12 by abutting against the second screw 14. In this way, the third screw 15 limits the relative counter-clockwise rotation of disk 8 with respect to disk 7.

A second end stop consists of the locking pin 10, which also has the function of limiting the rotation of rod 2 by abutting against the right end of the corresponding slot 11, since the adjustment disk 8 has at each slot 11 a pair of pegs 16 between which pin 10 is inserted. When the aerodynamic load on the surface of blade 1 increases, the latter tends to rotate together with rod 2 and consequently pin 10 is forced to move to the right causing a clockwise rotation of the adjustment disk 8 through pegs 16. Spring 12, or another similar resilient device, offers resistance to the movement of pin 10 to prevent it from reaching immediately the end stop against the edge of slot 11, thus achieving the adjustment of blade 1. In this way blade 1 can take a maximum angle of about 60° with respect to the rotor plane, starting from a rest position corresponding to an inclination of about 20°. Moreover, pin 10 limits the relative clockwise rotation of disk 8 with respect to disk 7.

As previously mentioned, the three components of the hub assembly 3 that are fixed on shaft 4 are provided with threaded radial holes for the fixing by means of screws. More specifically, the guy wires disk 6 is provided with a ring of ten peripheral axial holes 6a for the hooking of the guy wires 5, with three equally spaced axial holes 6b formed at a central collar 6c and with three equally spaced radial threaded holes 6d for the fixing screws (only two holes 6d are visible in Fig.5), also formed in collar 6c.

The spring-carrying disk 7 is fixed on shaft 4 by the same screws 13, 15 that act as hooking seat for spring 12 and end stop, respectively. This disk too is provided with three equally spaced axial holes 7b that are aligned with the corresponding holes 6b of the guy wires disk 6.

The blade-carrying disk 9 is fixed on shaft 4 by screws screwed into two radial threaded holes 9b spaced 90° apart and formed at a central collar 9c which also acts as a spacer between said disk and the adjustment disk 8.

The latter is obviously not provided with holes for fixing screws but has three equally spaced arcuate grooves 8b arranged in the circumferential direction at the above-mentioned holes 6b, 7b. More precisely, each groove 8b has an increasing depth in the counter-clockwise direction and when the rotor is in the rest position illustrated in Fig.1, with spring 12 at the minimum extension, holes 6b and 7b are aligned with the minimum depth ends of grooves 8b.

Three pins 17, only one of which is shown in Figs.1-3, are introduced through these holes so that each pin 17 slidingly engages the corresponding groove 8b of the adjustment disk 8, whereby upon rotation of the latter with respect to the fixed disks the axial projection of pins 17 beyond the guy wires disk 6 increases or decreases, i.e. grooves 8b act as cams.

The axial movement of these three pins 17 acts on a device that activates one or more electric generators, depending on their position. For example, in a condition of low wind when blades 1 are inclined at 20°, i.e. with spring 12 in the minimum extension state and pins 17 resting at the minimum depth position of grooves 8b and therefore with the maximum projection beyond the guy wires disk 6, said device activates only one electric generator.

Further electric generators may be activated upon increase of the wind speed. For example, with the blades inclined at 40°, i.e. with spring 12 in an intermediate extension state and pins 17 resting at the central position of grooves 8b so as to project less beyond the guy wires disk 6, the device activates a second generator. In case of high wind with the blades at the maximum inclination of 60°, i.e. with spring 12 in the maximum extension state and pins 17 resting at the maximum depth position of grooves 8b and therefore with the minimum projection beyond the guy wires disk 6, the device activates a third generator.

It is obviously possible to select at will the number and type of electric generators to be activated also in other cases different from the case mentioned above for merely exemplificative purposes, even changing the number of grooves 8b and pins 17 or reversing the slope of the grooves so that the projection of the pins is minimum in the rest condition and maximum with high wind.

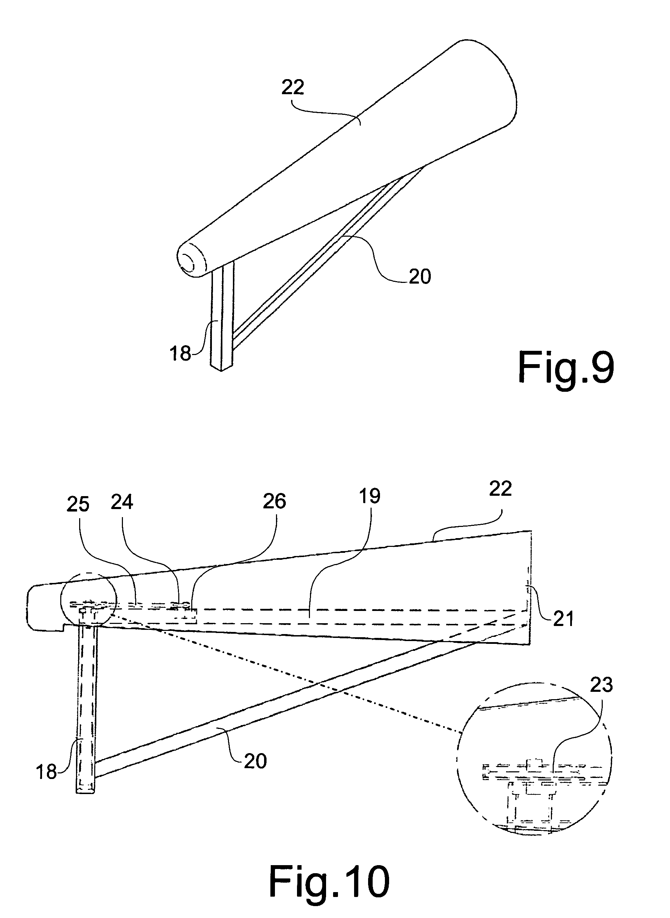

With reference to figures 9 to 12, there is now illustrated the rotor support and orientation structure that also performs the function of conveying the wind on blades 1.

This structure includes a vertical post 18 carrying at the top a horizontal shelf 19, supported by a diagonal strut 20, at whose distal end there is secured a vertical plate 21 on which the rotor is mounted. The power generators (not shown) are arranged on shelf 19 and enclosed by a conical fairing 22 that conveys the wind on the rotor.

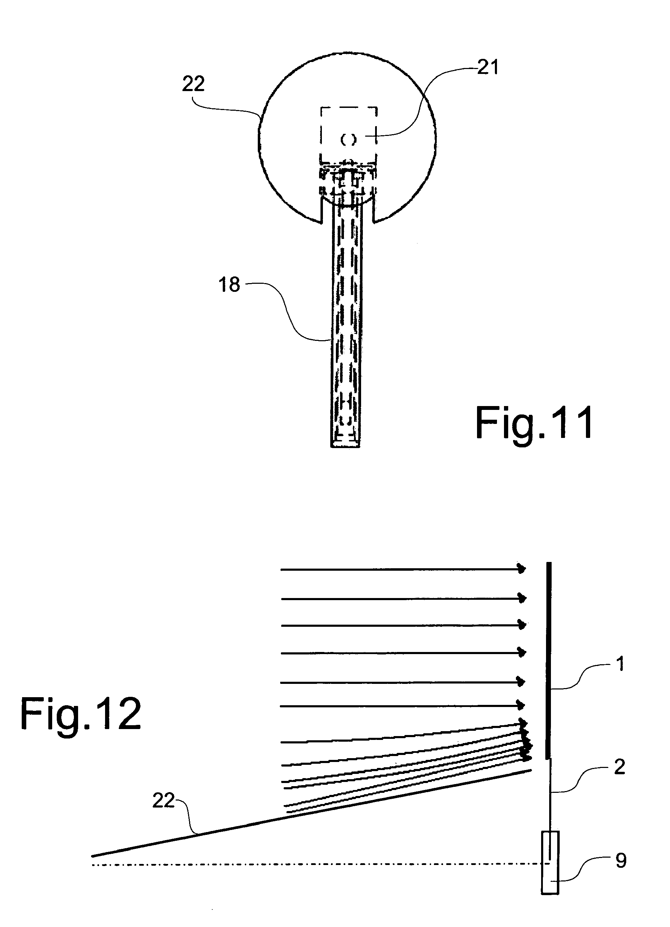

As illustrated in the diagram of Fig.12, said conveyor cone 22 is substantially coaxial with the rotation axis of the rotor and its base has a radius equal to the distance between the internal edge of blades 1 and said rotation axis, typically 1/3 R where R indicates the rotor radius (as a consequence, blades 1 typically are 2/3 R long). The length of cone 22 ranges from 1,5R to 4R, being greater when the average speed of the wind acting on the rotor is lower so as to have a longer arm for the rotation around the vertical support when the push of the wind on the rotor is smaller.

An articulation at the top of post 18 allows the rotation around the vertical support and an anti-swinging device is connected to the articulation and to the vertical support in order to prevent swinging of the wind turbine around the equilibrium positions. Said device includes a first pulley 23 connected to a second pulley 24, of smaller diameter, through a belt 25, with a speed regulator 26 connected to said second pulley 24. The object of said device is that of offering a great resistance to the rotation of the horizontal shelf 19 around the articulation in case of abrupt and sudden movements, i.e. with high accelerations, and on the contrary a minimum resistance to slow and gradual movements, i.e. with low accelerations.

In this way, the wind turbine will tend to set in the wind direction always with slow and gradual movements, and by adjusting the minimum intervention threshold of the device it is possible to prevent the rotor from constantly chasing every small variation in the wind direction.

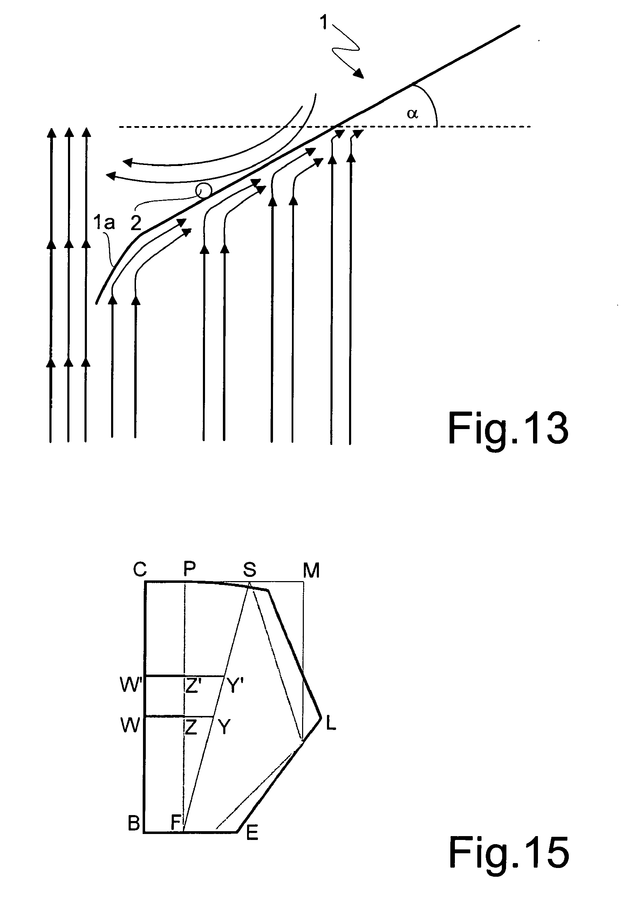

Turning now to the diagram of Fig.13, there is illustrated the air circulation around a blade 1 for not very high values of the angle of incidence α (about 30° in the example), when blade 1 acts as an "obstacle" against the wind and the air stream sliding along the rear side of the blade is minimum. In these conditions there is formed a sort of "Venturi tube" between two adjacent blades due to the narrowing of the air stream at the curved portion 1a of the blade.

This implies the generation of a depression in the rear region of blade 1, at said portion 1a, which in turn provokes behind blade 1 an air stream from the right edge toward the left edge that produces a thrust that is concordant in direction with the thrust on the front side. On the contrary, when the α values increase blade 1 will tend to operate as an airfoil and the Venturi effect will progressively decrease.

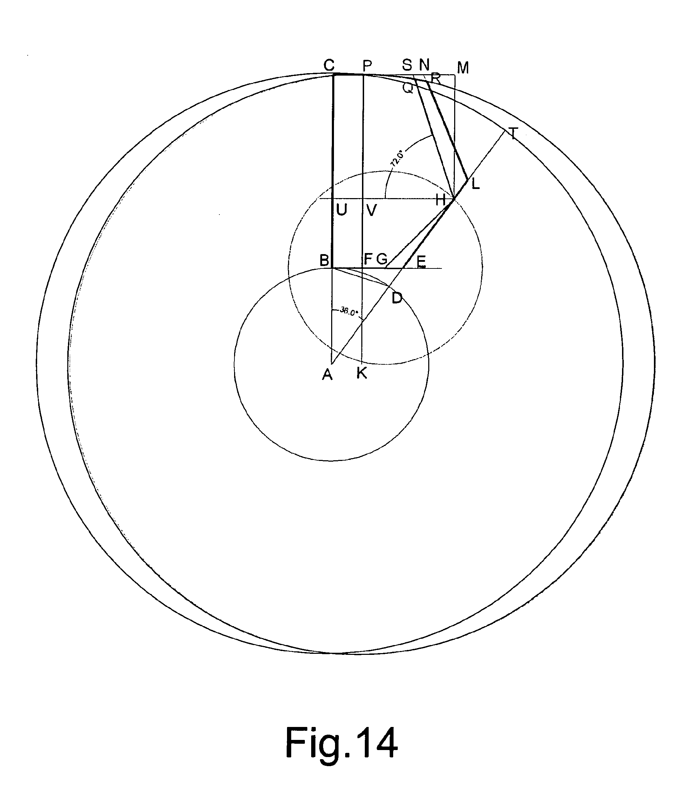

Finally, the geometric construction of the blade surface is illustrated with reference to figures 14 and 15.

Starting from a first circumference with center A and radius AC, divide it into 10 equal portions obtaining a sector CAT with a vertex angle of 36° and divide radius AC in two segments AB and BC such that AB=1/3 AC and BC=2/3 AC. By means of a second circumference with center A and radius AB, define point D on radius AT, and by means of the perpendicular to radius AC passing through B define point E on radius AT.

Find on segment BE point F such that BF=5 cm and through point F draw a segment KP parallel to radius AC such that KP=AC, said segment KP corresponding to rod 2 of blade 1. Find on segment FE point G such that FG=DE, and by means of a third circumference with center G and radius equal to AB define point H on radius AT, segment GH corresponding to the bend line of the internal triangular portion 1d of blade 1. Find on segment HT point L such that HL=FG.

By means of the perpendicular to radius AC passing through C and of the parallel to radius AC passing through H define the intersection point M of these lines, and find on segment CM point N such that NM=BF. Drawing from point H a line at an angle of 72° with respect to the perpendicular to radius AC, define the intersection point S of said line with segment CM.

By means of a fourth circumference with center K and radius KP define points Q and R respectively on segment HS and on segment LN, segment HQ corresponding to the bend line of the external trapezoidal portion 1c of blade 1.

The perimeter of the blade is therefore defined by segment BC, segment CP, arc PQR, segment RL, segment LE and segment EB, the two backward-bent portions 1c, 1d being defined respectively by trapeze HQRL and triangle GHE. The backward bend angle of portion 1c along segment HQ ranges from 20° to 30°, while that of portion 1d along segment GH ranges from 10° to 25°.

The left portion 1a that is curved forward is defined by rectangle BCPF and has a decreasing radius of curvature with the maximum at segment CP and the minimum at segment BF. In order to define the radius of curvature consider in Fig.15 rectangle BCPF as formed by n segments WZ, W'Z', ... each parallel to segment BF. Each of these n segments will be the arc of a circumference of radius WY, W'Y', ... lying in a plane perpendicular to the blade plane and in which points Y, Y', ... are defined by extending segments WZ, W'Z', ... until they intersect segment FS.

It has been found that variations up to 10% with respect to the above-mentioned values still lead to valid blade configurations, although the maximum efficiency is achieved by the described configuration. In particular, the length of segment BF can be considered constant with a maximum increase of about 30% as the blade size increases.

The field of application of such a blade is advantageous for a radius AC ranging from 15 cm to 220 cm; beyond said size the stresses affecting the external portion of the blade and the aerodynamic turbulence that arises cause a significant decrease of the overall efficiency of the generator.

In order to better illustrate the advantages of the proposed novel wind turbine arrangement it is necessary to point out which are the main factors affecting the efficiency of a rotor.

Under many aspects a blade can be considered as an airfoil and therefore it can be said that the air stream hitting the blade is divided into two streams, one sliding along the front side and one sliding along the back side. On the blade there are therefore different pressures between the front side and the back side whose sum generates a thrust force TF that can be decomposed into a component perpendicular to the air stream and one parallel thereto: TF=LI+DR, where the component LI is the lift generated by the deviation of the air stream and whose value depends on many factors among which the blade shape and the characteristics of the stream, while component DR is the drag and its value depends on the weight and shape of the blade, on the air viscosity and on the turbulence caused by the movement of the air stream.

More specifically, the useful portion of the thrust force TF, i.e. the scalar value of lift LI, results directly proportional to the lift coefficient of the blade (as a function of the angle of incidence α), to the air density and to the square of the wind speed V. It should be noted that the speed V at which the wind hits a generic point of the blade surface is the sum of two components: V = W + TV, where the component W is the real speed at which the air stream hits the blade, the same at any point of the blade assuming that the air stream is homogeneous, and component TV is the speed at which the blade moves toward the wind, i.e. the tangential velocity at each point of the blade, whose scalar value increases linearly as the distance from the rotation axis increases.

In order to obtain the best possible compromise between the parameters that can make the thrust force TF large, one of the factors that greatly affects the geometry and structure of the blade is speed V. In fact, an external blade portion generates a thrust larger than that generated by an internal portion of the same area due to the different speed V at which the wind hits the blade surface. However, the theoretical advantage of having a great external area that generates a large thrust becomes counterproductive when you take into account the fact that the dynamic pressure of the wind is proportional to the square of the speed, and the thrust becomes rapidly critical with respect to the materials and the stresses that the blade undergoes. Furthermore, if the thrust on the internal and external portions are very different one portion tends to "brake" the other with a significant increase in the overall drag.

It has also been experimentally found that when speed V exceeds a certain threshold a sudden increase of the drag component DR occurs due to aerodynamic disturbances. On the other hand it is clear that the choice of an external blade surface of reduced area allows to achieve high rotational speeds yet generates small thrusts and requires high winds. In fact, in order to overcome said drawbacks the tendency has developed to make blades of ever increasing radial size in which the external portion has a very small surface, and to greatly space apart the blades to prevent as much as possible the aerodynamic disturbances between the blades thus making mono-bi-tri-blade rotors.

With the purpose of increasing the efficiency of the novel rotor according to the present invention, i.e. the thrust TF on the blades that generates the torque, the applicant acted along the following guidelines:
1) Increase of lift LI by:
   a) using a large blade surface,
   b) increasing the lift on the internal portion of the blade,
   c) using the Venturi effect;
2) Decrease of drag DR through:
   a) shape, arrangement and number of the blades;
   b) self-adjustment of the blade incidence according to the air stream;
3) Decrease of the mass of the blades to be rotated by having the thrust TF act on the rods 2 on which blades 1 are fixed.

In detail, the application of said guidelines resulted in the following technical solutions of the present rotor:
1.a) blades 1 covering over 75% of the useful area crossed by the wind, with the external surface defined by polygon UCPQRLH that has an area twice the internal surface BUHE (Fig.14);
1.b) using only the surface BUHE, since it has been found that the thrust is larger if only the surface BUHE is used rather than using the whole surface AUH; in addition, using the conical conveyor 22 to direct on said surface the air stream that would be intended for surface ABE corresponds to increasing the air density on surface BUHE and therefore the lift generated thereon.

It has further been found that, for the indicated dimensions of the conical conveyor 22, also an increase in the lift coefficient is achieved since the stream deviated by the conveyor concentrates in the central portion of surface BUHE with an angle of incidence very similar to α but with a direction from the inside of the blade toward the outside slightly greater than the vertex angle of the cone of conveyor 22. The combination of these two tricks has the effect of increasing the thrust on the internal portion of the blade so that it is almost equivalent to that on the external portion.

This is a significant achievement also from the structural point of view since it allows to make a light blade, and the little weight of the blades makes the rotor very sensible and generates a useful thrust even with very low winds.
1.c) ondulated shape of the left portion 1a of the blade that was designed and experimentally tested to increase the Venturi effect on the back of the blade even at very low rotational speeds. In fact, the curvature of rectangle BCPF is greater at the internal portion to cut more effectively the air stream even at low rotational speeds, whereas at the external portion the curvature is smaller to compensate for the higher tangential velocity and to prevent an excess of Venturi effect.
2.a) rotor with 10 blades since tests have proven that 10 radial blades inclined at at least 15°-25° with respect to the rotor plane cause a minimum reciprocal aerodynamic disturbance even at high rotational speeds, minimizing drag DR. In order to prevent the air leaving a blade from worsening the aerodynamic efficiency of the following blade, there have been provided the two backward-bent portions HQRL and GHE that act as winglets suitable to reduce the generation of turbulence and vortices.
2.b) mechanical device for self-adjustment of the blade incidence (elements 8, 10, 11, 12, 16) to prevent the external portion of the blade from operating with high winds at an excessive speed beyond which the thrust sharply decreases even down to negative values. Since the higher is the wind speed on the blades and the greater is the inclination thereof, this prevents the tangential velocity from becoming excessive because the increase in the angle of incidence implies a decrease in thrust, the thrust component due to the Venturi effect is reduced, the distance between the surfaces of two adjacent blades increases thus reducing the turbulence that would occur with high winds, and the blade is prevented from experiencing an excessive thrust that would be noxious to its structural integrity while allowing the exploitation of high winds yet with a very light blade structure.
3) blade 1 fixed on a rod 2 introduced in disk 9 and helped in withstanding the stress by a guy wire 5 hooked to disk 6, so as to have the thrust vector TF located slightly above the central portion of the blade surface both with weak wind and with strong wind, thus increasing the torque arm. The mechanical stresses that blade 1 undergoes are absorbed by rod 2 and in particular by the guy wire 5 through which rod 2 is connected to disk 6, said arrangement being possible in that the aerodynamic disturbance of guy wire 5 is negligible at the operating speeds of the rotor and in this way only rod 2 and the guy wire 5 perform the task of supporting the surface of blade 1 exposed to the wind, so that the latter can remain light. In this way the same blade can operate with winds ranging from little more than zero up to 42 m/s, and the little mass of the blades makes the rotor readier in meeting the wind push.

It is clear that the above-described and illustrated embodiment of the wind turbine according to the invention is just an example susceptible of various modifications. In particular, the exact shape and size of blades 1 may change within the above-mentioned limits, and the auxiliary devices of the rotor such as the device for the self-adjustment of the incidence and the anti-swinging device may be made with other mechanisms that are mechanically equivalent to those illustrated above.

## Claims

1. Horizontal-axis wind turbine comprising a rotor provided with a plurality of blades (1) and supported by a support and orientation structure, at least one electric generator connected to the shaft (4) of said rotor and an automatic device for the adjustment of the incidence of said rotor blades (1), **characterized in that** the rotor blades (1) are fixed on rods (2) radially introduced at equally spaced positions in a hub assembly (3) mounted on said shaft (4), said rods (2) being connected to said hub assembly (3) also through guy wires (5) secured at their distal end.

2. Wind turbine according to claim 1, **characterized in that** the blades (1) are ten.

3. Wind turbine according to one of the preceding claims, **characterized in that** each guy wire (5) is hooked to the hub assembly (3) at a position that considering the direction of rotation of the rotor lags 36° behind with respect to the position of the rod (2) to which the guy wire (5) is secured.

4. Wind turbine according to one of the preceding claims, **characterized in that** each rod (2) is introduced into a bushing (9a) and locked therein by means of an axial pin (10) that passes through a horizontal slot (11) and engages a transverse hole formed in the rod (2).

5. Wind turbine according to one of the preceding claims, **characterized in that** the hub assembly (3) is made up of a guy wires disk (6) to which the guy wires (5) are hooked, a spring-carrying disk (7), an adjustment disk (8) and a blade-carrying disk (9) in which the rods (2) are introduced, all said disks but the adjustment disk (8) being fixed on the shaft (4).

6. Wind turbine according to the preceding claim, **characterized in that** the adjustment disk (8) is drawn into rotation by a spring (12) extending in the circumferential direction along about half of the periphery of the spring-carrying disk (7), the two ends of said spring (12) being fixed respectively to a first screw (13) screwed into a radial threaded bore (7a) formed in the spring-carrying disk (7) and to a second screw (14) screwed into an axial threaded bore (8a) formed in the adjustment disk (8), a third screw (15) screwed into a second radial threaded bore formed in the spring-carrying disk (7) at a position diametrically opposite to said radial bore (7a) acting as an end stop to define the minimum extension of the spring (12) by abutting against said second screw (14).

7. Wind turbine according to one of claims 4 to 6, **characterized in that** the adjustment disk (8) has at each slot (11) of the blade-carrying disk (9) a pair of pegs (16) between which the locking pin (10) of the rod (2) is inserted.

8. Wind turbine according to one of claims 5 to 7, **characterized in that** the three components (6, 7, 9) of the hub assembly (3) that are fixed on the shaft (4) are provided with radial threaded holes for the fixing by means of screws that engage corresponding radial threaded bores formed in the shaft (4).

9. Wind turbine according to the preceding claim, **characterized in that** the guy wires disk (6) is provided with three equally spaced radial threaded holes (6d) formed at a central collar (6c).

10. Wind turbine according to claim 8 or 9, **characterized in that** the spring-carrying disk (7) is fixed on the shaft (4) by the same screws (13, 15) that act as hooking seat for the spring (12) and end stop, respectively.

11. Wind turbine according to one of claims 8 to 10, **characterized in that** the blade-carrying disk (9) is provided with two radial threaded holes (9b) spaced 90° apart and formed at a central collar (9c) which also acts as a spacer between said disk (9) and the adjustment disk (8).

12. Wind turbine according to one of claims 5 to 11, **characterized in that** the guy wires disk (6) is provided with three equally spaced axial holes (6b) formed at the central collar (6c), the spring-carrying disk (7) is provided with three equally spaced axial holes (7b) that are aligned with said axial holes (6b) of the guy wires disk (6), and the adjustment disk (8) is provided with three equally spaced arcuate grooves (8b) having an increasing depth from one end to the other arranged in the circumferential direction so that one end is at the axial holes (6b, 7b) of said disks (6, 7) when the blades (1) are in the rest position, three pins (17) being introduced through the above-mentioned axial holes (6b, 7b) so that each of said pins (17) slidingly engages one of said grooves (8b) and the axial movement of the pins (17) caused by the relative rotation between the adjustment disk (8) and the rest of the hub assembly (3) results in changing the number of electric generators connected to the rotor.

13. Wind turbine according to one of the preceding claims, **characterized in that** each blade (1) has the shape of an irregular pentagon divided into four portions with a first rectangular portion (1a) that extends from the rod (2) to the closest lateral edge and is curved forward with a curvature more pronounced in the internal region and less in the external region, and a second flat portion (1b) that extends from the rod (2) toward the opposite lateral edge upto two bend lines that define a third external trapezoidal portion (1c) and a fourth internal triangular portion (1d) which take up the whole edge and are bent backward.

14. Wind turbine according to the preceding claim, **characterized in that** the external trapezoidal portion (1c) of the blade (1) is bent backward at an angle ranging from 20° to 30°, preferably 25°.

15. Wind turbine according to claim 13 or 14, **characterized in that** the internal triangular portion (1d) is bent backward at an angle ranging from 10° to 25°, preferably 20°.

16. Wind turbine according to one of the preceding claims, **characterized in that** each blade (1) can take a maximum angle of about 60° with respect to the rotor plane, starting from a rest position corresponding to an inclination ranging from 15° to 25°, preferably 20°.

17. Wind turbine according to one of the preceding claims, **characterized in that** the surface of the blades (1) is defined according to a geometric construction method comprising the following steps:
a) starting from a first circumference with center A and radius AC, divide it into 10 equal portions obtaining a sector CAT with a vertex angle of 36° and divide radius AC in two segments AB and BC such that AB=1/3 AC and BC=2/3 AC;
b) by means of a second circumference with center A and radius AB, define point D on radius AT;
c) by means of the perpendicular to radius AC passing through B define point E on radius AT;
d) find on segment BE point F such that BF=5 cm;
e) through point F draw a segment KP parallel to radius AC such that KP=AC;
f) find on segment FE point G such that FG=DE;
g) by means of a third circumference with center G and radius equal to AB define point H on radius AT, segment GH corresponding to the bend line of the internal triangular portion (1d);
h) find on segment HT point L such that HL=FG;
i) by means of the perpendicular to radius AC passing through C and of the parallel to radius AC passing through H define the intersection point M of these lines;
j) find on segment CM point N such that NM=BF;
k) drawing from point H a line at an angle of 72° with respect to the perpendicular to radius AC, define the intersection point S of said line with segment CM;
l) by means of a fourth circumference with center K and radius KP define points Q and R respectively on segment HS and on segment LN, segment HQ corresponding to the bend line of the external trapezoidal portion (1c);
m)the portion (1a) that is curved forward is defined by rectangle BCPF and has a decreasing radius of curvature with the maximum at segment CP and the minimum at segment BF, said radius of curvature being obtained point by point from the arc of a circumference of radius WY, W'Y', ... lying in a plane perpendicular to the plane of the blade (1) and in which points Y, Y', ... are defined by extending segments WZ, W'Z', ... parallel to segment BF that make up said rectangle BCPF until they intersect segment FS;
n) the perimeter of the blade is defined as the polygon composed by segment BC, segment CP, arc PQR, segment RL, segment LE and segment EB.

18. Wind turbine according to the preceding claim, **characterized in that** the values used in the geometric construction method for defining the surface of the blade (1) can change up to 10% except the length of segment BF that can change up to 30%.

19. Wind turbine according to claim 17 or 18, **characterized in that** in the geometric construction method for defining the surface of the blade (1) the radius AC ranges from 15 cm to 220 cm.

20. Wind turbine according to one of the preceding claims, **characterized in that** the rotor support and orientation structure includes a conical fairing (22) that is substantially coaxial with the rotation axis of the rotor and whose base has a radius equal to the distance between the internal edge of the blades (1) and said rotation axis, said radius being preferably equal to one third of the rotor radius.

21. Wind turbine according to the preceding claim, **characterized in that** the length of the conical fairing (22) ranges from 1,5 times to 4 times the rotor radius.

22. Wind turbine according to one of the preceding claims, **characterized in that** the rotor support and orientation structure includes an anti-swinging device suitable to offer a great resistance to the rotation of the rotor in case of abrupt and sudden movements and on the contrary a minimum resistance to slow and gradual movements.

23. Wind turbine according to the preceding claim, **characterized in that** the anti-swinging device includes a first pulley (23) connected to a second pulley (24) of smaller diameter through a belt (25), as well as a speed regulator (26) connected to said second pulley (24).
